# EUROPEAN PATENT SPECIFICATION

(11) **EP 4 509 297 B1**
(45) Date of publication and mention of the grant of the patent: **20.05.2026**
(21) Application number: 23788366.5
(22) Date of filing: 12.04.2023
(51) Int. Cl.: B29D 35/02, A43B 7/083, A43B 7/10, A43B 17/00

(54) **INSOLE EQUIPPED WITH VENTILATING FUNCTION, AND SHOE**
EINLEGESOHLE MIT LÜFTUNGSFUNKTION UND SCHUH
PREMIÈRE DE PROPRETÉ ÉQUIPÉE D'UNE FONCTION DE VENTILATION, ET CHAUSSURE

(30) Priority: 14.04.2022 JP 2022066842; 27.09.2022 JP 2022153609; 20.02.2023 JP 2023024498
(43) Date of publication of application: 19.02.2025
(73) Proprietor: Infom Co., Ltd., Ichinomiya-shi, Aichi 491-0101 (JP)
(72) Inventor: ITO,Takayoshi, Ichinomiya-shi, Aichi 491-0101 (JP); ITO, Takashi, Seto-shi, Aichi 489-0926 (JP); OBAZAWA, Satoko, Yokohama-shi, Kanagawa 226-0016 (JP)
(74) Representative: Zacco Sweden AB
(86) International application number: PCT/JP2023/014890
(87) International publication number: WO 2023/199948

(56) References cited:
- JP-A- 2021 164 548
- JP-B1- 6 232 652
- JP-U- 3 183 852
- JP-U- S5 618 703
- US-A- 1 453 394

## Description

### Technical Field

The present disclosure relates to an insole and a shoe and more specifically relates to an insole and a shoe with ventilatory function.

### Background

Shoes have low air permeability inside thereof. Wearing shoes for a long time makes the feet sweaty and brings a feeling of discomfort. This is one cause of the athlete's foot. The applicant of the present disclosure has accordingly proposed a ventilation shoe provided with a ventilation device inside of a shoe sole and an upper (Patent Literature 1).

In the ventilation shoe described in Patent Literature 1, however, the ventilation device is provided inside of the shoe sole and an air release path is formed in the upper portion. This causes problems of the complicated structure and the difficulty in manufacture. The configuration of Patent Literature 1 is not applicable to a shoe manufactured by an integral molding method that integrally molds an upper and an outsole, such as a vulcanizing method or an injection method, or to an existing shoe.

Patent Literature 2 and Patent Literature 3 have, on the other hand, proposed insoles having ventilatory function. Patent Literature 2 discloses a ventilatory shoe insert that is provided with an air intake valve and an air release valve, that is made of a material having elasticity, and that is laid to tightly adhere to the shoe sole and thereby form an air chamber. Patent Literature 3 discloses an air-permeable insole including an air bag, and a sole body configured to place the air bag therein and provided with an air intake district, an air release district, an air intake path connecting the air bag with the air intake district, and an air release path connecting the air bag with the air release district.

Patent Literature 4 discloses a ventilated insole according to the preamble of claim 1.

### Citation List

### Patent Literature

Patent Literature 1: Japanese Patent No. 2021-164548A
Patent Literature 2: Japanese Utility Model No. 56-18703U1
Patent Literature 3: Japanese Utility Model No. 3183852U
Patent Literature 4: Japanese Utility Model No. JPS5618703U.

### Summary

### Technical Problem

In the ventilation shoe described in Patent Literature 2, the air intake valve and the air release valve are directly in contact with the shoe sole, which is made of an elastic body such as a rubber. A contact surface of the valve is, however, deformed due to deformation of the shoe by walking. This causes incomplete sealing and results in insufficient ventilation.
There is also a possibility that the valve is fallen out or is broken. This leads to poor durability.

The air-permeable insole described in Patent Literature 3 has a pump chamber that is present only in a heel location. This configuration causes a small amount of ventilation, provides a complicated structure and has poor durability. There is also a problem that the air-permeable insole is not able to implement ventilation in the case of jogging or walking on tip toe.

One object of the present disclosure is thus to provide an insole that is thin but has high ventilatory performance and high durability, and that is applicable to a shoe manufactured by an integral molding method, such as a vulcanizing method or an injection method, as well as a shoe. Solution to Problem

The invention is set out in the appended set of claims. Additional embodiments of the invention are disclosed in the dependent claims.

### Advantageous Effects of Present Disclosure

The insole of the present disclosure is applicable to a shoe manufactured by an integral molding method, such as a vulcanizing method or an injection method, or an existing shoe, and assures high ventilatory performance irrespective of thinness. The check valve includes a base member provided with an open/close hole formed therein and a valve element configured to open and close the open/close hole. This configuration prevents the check valve from being deformed even by application of an external force and assures ventilation. The open/close hole of the check valve is extending in the lateral direction, and the check valve is placed, such that the open/close hole penetrates in a direction perpendicular to the thickness direction of the insole. This configuration increases the amount of ventilation with restricting the height of the check valve. The configuration of the valve element that is formed in a laterally elongated shape and that is widely opened in the lateral direction in the course of passage of the air suppresses deformation of the valve element and enhances the durability. The configuration of the present disclosure provides the insole that has the simple structure that is readily manufacturable and that assures high ventilatory performance.

### Brief Description of Drawings

Fig. 1 is a diagram illustrating an air release state of a shoe with an insole 1 laid therein according to a first embodiment;
Fig. 2 is a diagram illustrating an air intake state of the shoe with the insole 1 laid therein according to the first embodiment;
Fig. 3 is a plan view illustrating a main body plate 2 according to the first embodiment;
Fig. 4 is a sectional view (a cross section taken along a line A-A in Fig. 3) illustrating the insole 1 according to the first embodiment;
Fig. 5 is a plan view illustrating a cover plate 3 according to the first embodiment;
Fig. 6(a) is a plan view and Fig. 6(b) is a sectional view taken along a line X-X of an air intake check valve V1 and an air release check valve V2 according to the first embodiment;
Fig. 7 is a plan view illustrating a state that a cover plate 103 of an insole 101 is removed according to a second embodiment;
Fig. 8 is a sectional view (a cross section taken along a line B-B in Fig. 7) illustrating a shoe with the insole 101 laid therein according to the second embodiment;
Fig. 9 is a plan view illustrating a base plate 106 according to the second embodiment;
Fig. 10 is a sectional view illustrating a boot with an insole 201 laid therein according to a third embodiment;
Fig. 11(a) is a plan view and Fig. 11(b) is a sectional view taken along a line Y-Y of a modification of the air intake check valve V1 and the air release check valve V2;
Fig. 12 is a bottom view illustrating a main body plate 302 according to a fourth embodiment;
Fig. 13 is a sectional view (corresponding to a cross section taken along a line C-C in Fig. 12) illustrating an insole 301 according to the fourth embodiment;
Fig. 14 is a plan view illustrating a valve fixing plate 305 according to the fourth embodiment;
Fig. 15 is a bottom view illustrating a main body plate 402 according to a fifth embodiment;
Fig. 16 is a sectional view (corresponding to a cross section taken along a line D-D in Fig. 15) illustrating an insole 401 according to the fifth embodiment;
Fig. 17 is a plan view illustrating the insole 401 according to the fifth embodiment; and
Fig. 18(a) is a front view and Fig. 18(b) is a sectional view taken along a line Z-Z of the air intake check valve V1 and the air release check valve V2 according to the fifth embodiment.

### Description of Embodiments

Below first to fifth embodiments of an insole will be discussed. The invention set out in the appended set of claims covers the fifth embodiment. However, other insoles according to first to forth embodiments will also be discussed. The first to forth embodiments are not according to the invention and are present for illustration purposes only.

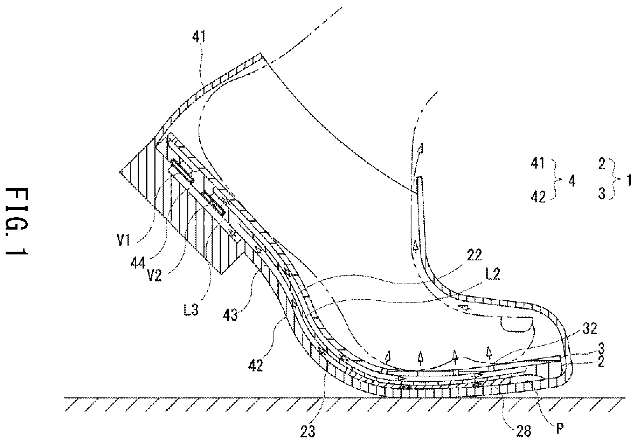

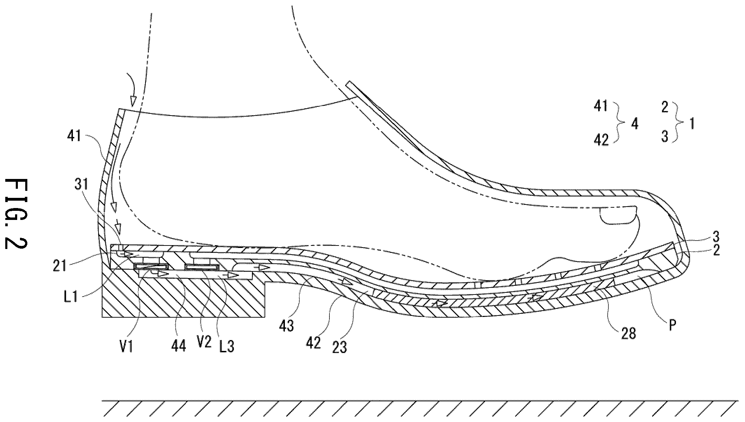

A first embodiment of the present disclosure is described with reference to Fig. 1 to Fig. 6. Fig. 1 illustrates the flow of the air when a wearer of shoes 4 steps one foot on the ground. Fig. 2 illustrates the flow of the air when the wearer releases the stepped foot from the ground. As shown in Fig. 1 and Fig. 2, an insole 1 includes a main body plate 2 and a cover plate 3 and has ventilatory function of ventilating the air inside of the shoe 4. The insole 1 is laid on an inner bottom face 43 in the shoe 4 and has at least the entire circumference of a lower face peripheral part thereof adhering to the inner bottom face 43. A commercially available shoe insert or the like (not shown) may be appropriately placed on an upper face of the insole 1.

The shoe 4 is manufactured by an integral molding method that integrally molds an upper 41 and an outsole 42. Examples of the integral molding method include a vulcanizing method and an injection method.

The insole 1 includes an air intake path L1 that is configured to communicate with an outside air area provided inside of the shoe; an air release path L2 that serves to release the air inside of the shoe; an air intake check valve V1 that is placed to communicate with the air intake path L1; an air release check valve V2 that is placed to communicate with the air release path L2; and a pump groove portion 23 that is provided to form a flat pump chamber P, which is configured to communicate with the air intake check valve V1 and with the air release check valve V2. The outside air area provided inside of the shoe denotes a clearance formed between the periphery of a rear portion of a heel and an inner surface of the shoe and is an area which the dried outside air flows in from an upper edge of a rear portion of the shoe.

At least part of the air intake path L1 or the air release path L2 is formed as a space surrounded by an air intake path groove portion 21 or an air release path groove portion 22 formed in an upper face of the main body plate 2 and a lower face of the cover plate 3. This configuration is, however, not essential. For example, in a modified configuration, the cover plate 3 may be provided with groove portions, and the air intake path L1 and the air release path L2 may be formed by the upper face of the main body plate 2 and the groove portions of the cover plate 3. The pump chamber P is formed by the pump groove portion 23 formed in a lower face of the main body plate 2 and an upper face of the inner bottom face 43 of the shoe 4.

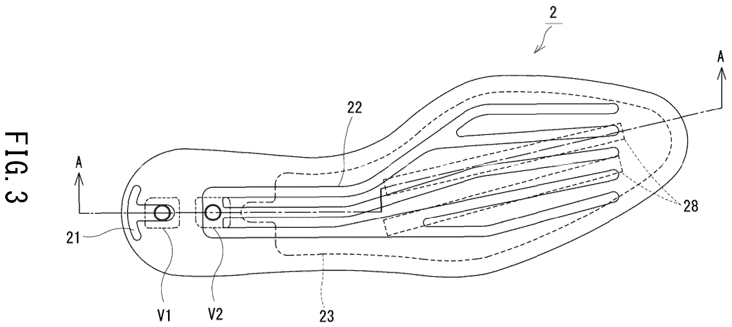

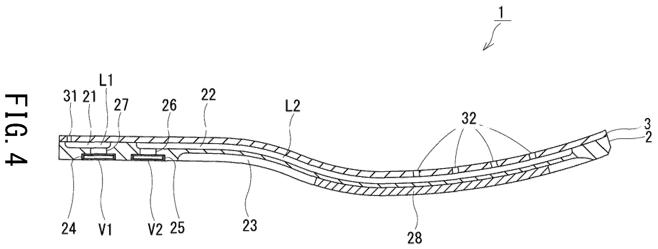

Fig. 3 is a plan view illustrating the state that the air intake check valve V1 and the air release check valve V2 are mounted to the main body plate 2. Fig. 4 is a sectional view of the insole 1 and is a sectional view taken along a line A-A of Fig. 3 with the cover plate 3 placed thereon. As shown in Fig. 3 and Fig. 4, an air intake valve mounting hole 24 which the air intake check valve V1 is fit in is formed at a posterior position in a heel location of the main body plate 2, and an air release valve mounting hole 25 which the air release check valve V2 is fit in is formed at an anterior position in the heel location of the main body plate 201. The valve mounting holes 24 and 25 are both in a topped tubular shape respectively having openings 26 and 27 in top faces thereof.

The air intake check valve V1 and the air release check valve V2 are inserted upward to be fit in the valve mounting holes 24 and 25 and to adhere thereto and to be fixed therein. The pump groove portion 23 is formed in the lower face of the main body plate 2 to be located in front of the valve mounting holes 24 and 25. The pump groove portion 23 is a wide flat groove including the position of an arch of the foot and a toe area and, along with an upper face of the inner bottom face 43 of the shoe 4 placed below the pump groove portion 23, forms the pump chamber P.

The air intake path groove portion 21 is formed in the upper face of the main body plate 2 to be extended rearward from an upper side of the opening 27 and to be further extended in a width direction at a rear end thereof. Along with a lower face of the cover plate 3 placed above the air intake path groove portion 21, the air intake path groove portion 21 forms the air intake path L1. The air intake path L1 communicates with the air intake check valve V1.

The air release path groove portion 22 is formed in the upper face of the main body plate 2 to be extended forward from an upper side of the opening 26. Along with the lower face of the cover plate 3 placed above the air release path groove portion 22, the air release path groove portion 22 forms the air release path L2. The main body plate 2 and the cover plate 3 are made of an elastic body, such as a rubber, a synthetic resin or the like.

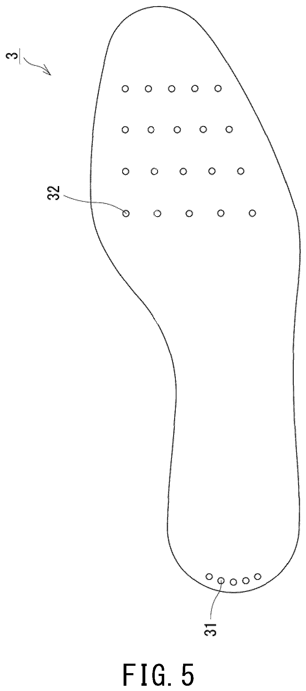

Fig. 5 illustrates the cover plate 3 that has a plurality of air intake holes 31 formed at a rear end thereof and a plurality of air release holes 32 formed in the vicinity of the toes. The air intake holes 31 communicate with the air intake path L1, and the air release holes 32 communicate with the air release path L2.

The lower face of the cover plate 3 adheres to a contact surface of the upper face of the main body plate 2 by an adhesive or the like.

As shown in Fig. 1 and Fig. 2, in a heel portion of the inner bottom face 43 of the shoe 4, a common path groove portion 44 that is extended in a longitudinal or front-rear direction, is formed at a position below the valve mounting holes 24 and 25 in the state that the main body plate 2 adheres above the inner bottom face 43. Along with the lower face of the main body plate 2, the common path groove portion 44 forms a common path L3, which is configured to communicate with the air intake check valve V1, the air release check valve V2 and the pump chamber P.

A plurality of cushions 28 that are extended to be protruded downward, adhere to the pump groove portion 23 and serve to apply a restoring force to the compressed pump chamber P and to prevent reduction of the ventilation capacity due to deformation of the pump chamber. The cushions 28 are made of an elastic body, such as a rubber, a synthetic resin or the like, having high elasticity and durability.

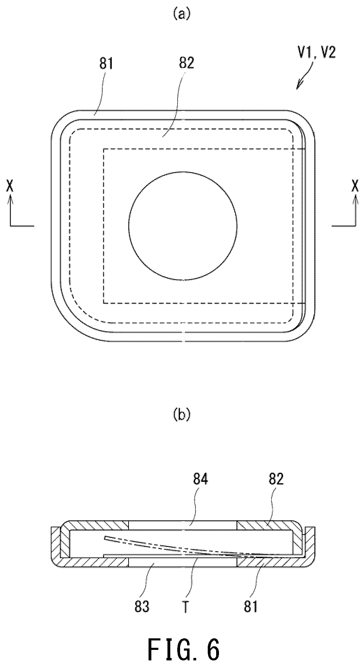

The air intake check valve V1 and the air release check valve V2 have identical structures and include a valve element T, a base member 81 and a cover member 82 tightly fit in the base member 81 as shown in Fig. 6. The base member 81 has a thin flat box-like shape that includes a main face portion and a side face portion continuous with the main face portion and that has one open face. An open/close hole 83 is formed in the main face portion to serve as an air inlet that is controlled to be opened and closed. The cover member 82 similarly has a thin flat box-like shape that includes a main face portion and a side face portion continuous with the main face portion and that has one open face. A continuous hole 84 is formed in the main face portion to serve as an air outlet. The base member 81 and the cover member 82 are made of a material, such as a metal, a synthetic resin or the like, having high strength.

The valve element T has a bending margin at one end thereof. Placing this bending margin between an inner side face of the base member 81 and an outer side face of the cover member 82 assures retention of the valve element T and enables the valve element T to be readily assembled to the base member 81. The valve element T is made of a thin metal plate or a thin synthetic resin plate having flexibility.

The air intake check valve V1 is mounted to the air intake valve mounting hole 24 in such an attitude that the open/close hole 83 is placed on the upper side and the continuous hole 84 is placed on the lower side. The outside of the open/close hole 83 communicates with the air intake path L1, whereas the continuous hole 84 communicates with the pump chamber P via the common path L3. The air release check valve V2 is mounted to the air release valve mounting hole 25 in such an attitude that the open/close hole 83 is placed on the lower side and the continuous hole 84 is placed on the upper side. The open/close hole 83 communicates with the pump chamber P via the common path L3, whereas the outside of the continuous hole 84 communicates with the air release path L2.

The following describes the ventilatory function in the shoe 4 with the insole 1 laid therein, with reference to Fig. 1 and Fig. 2. Fig. 1 is a diagram illustrating the state that the wearer of the shoes 4 steps one foot on the ground and illustrating the air release state of the insole 1. In this state, the pump chamber P is bent, and the heel is lifted up to apply a load to the toes. This causes the pump chamber P (the pump groove portion 23) to be compressed and causes the internal pressure of the pump chamber P to be higher than the internal pressure of the shoe. The air release check valve V2 is accordingly opened, so that the air inside of the pump chamber P goes through the common path L3 (the common path groove portion 44), the air release check valve V2 and the air release path L2 and is released to inside of the shoe from the air release holes 32. In this state, the air intake check valve V1 is closed.

Fig. 2 is a diagram illustrating the state that the wearer of the shoes 4 releases the foot from the ground after the state of Fig. 1 and illustrating the air intake state of the insole 1. In this state, in the shoe 4 released from the ground, the pump chamber P is returned to the original flat condition by the restoring force of the cushions 28, so that the internal pressure of the pump chamber P becomes lower than the internal pressure of the shoe. This causes the air intake check valve V1 to be opened and causes the outside air to enter the pump chamber P through the air intake path L1, the air intake check valve V1 and the common path L3. In this state, the air release check valve V2 is closed. Repeating the above operations shown in Fig. 1 and shown in Fig. 2 causes the inside of the shoe to be certainly ventilated.

The insole of the present disclosure is applicable to, for example, the shoes manufactured by the integral molding method that integrally molds the upper 41 and the outsole 42. The air intake check valve V1 and the air release check valve V2 are provided in the heel portion that has less deformation, whereas the pump chamber having large deformation is not provided in the heel portion. This configuration prevents the check valves V1 and V2 from being damaged or from being fallen off. Furthermore, the check valves V1 and V2 having the structures described above are partly placed between the top faces of the valve mounting holes 24 and 25 and the upper face of the inner bottom face 43 of the shoe 4. This configuration causes the check valves V1 and V2 to be securely fastened in a vertical direction and assures the high stability. The thin pump chamber P is formed in a wide area from the position of the arch of the foot to the toe area and thereby assures the sufficient amount of ventilation.

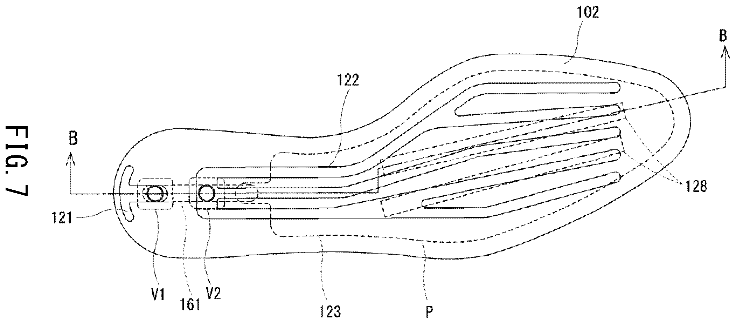

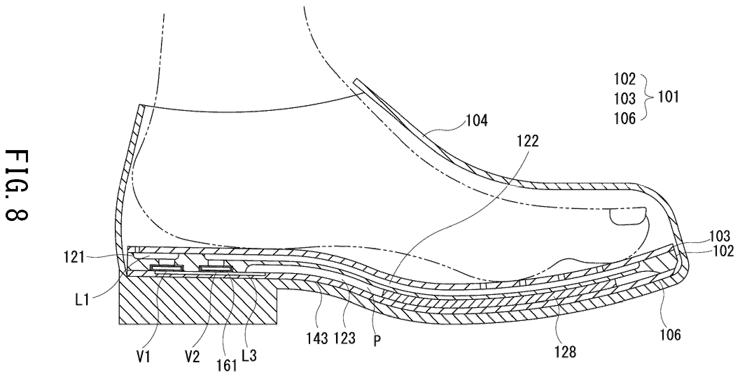

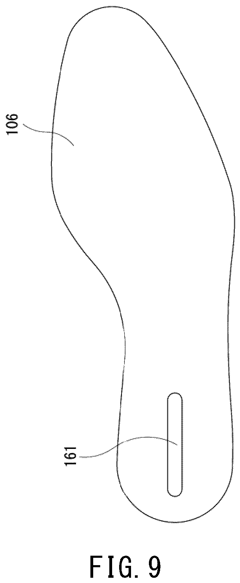

An insole 101 according to a second embodiment is described with reference to Fig. 7 to Fig. 9. This insole 101 basically has a similar structure to that of the insole 1. The illustration and the description of the first embodiment are thus applied to the common structure, and the following describes the differences. Reference signs given to the respective elements are corresponding numbers of the first embodiment in the 100s.

The insole 101 includes a base plate 106 that is laid under and adheres to a lower face of a main body plate 103. This configuration forms a pump chamber P as a space surrounded by a pump groove portion 123 and an upper face of the base plate 106. A common path groove portion 161 is formed in the upper face of the base plate 106 and below check valves V1 and V2. The common path groove portion 161 forms a common path L3, along with the lower face of the main body plate 102. According to a modification, another pump groove portion may be provided in the upper face of the base plate 106 and may form the pump chamber P, along with the lower face of the main body plate 102 or the pump groove portion 123.

According to this embodiment, the insole 101 independently has the ventilatory function. This configuration eliminates the need for adhesion of the insole 101 onto an inner bottom face 143 of a shoe 104. This configuration also eliminates the need for forming a common path groove portion in the inner bottom face 143 in the shoe 104. The configuration of this embodiment is thus applicable to the existing shoes.

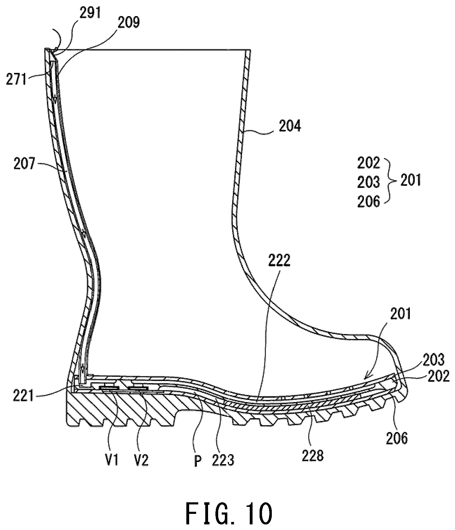

An insole 201 according to a third embodiment is described with reference to Fig. 10. This insole 201 basically has a similar structure to that of the insole 101. The illustrations and the descriptions of the first embodiment and the second embodiment are thus applied to the common structure, and the following describes the differences. Reference signs given to the respective elements are corresponding numbers of the first embodiment in the 200s.

The insole 201 is placed on a bottom face of a boot 204 and serves to ventilate the air inside of the boot. The boot 204 is provided with an air intake tube (outside air introducing path) 207 that is placed in a rear portion of the boot 204 and that is extended in an approximately vertical direction. The air intake tube 207 is formed by a flexible tube or the like. The air intake tube 207 has an upper end portion 271 that serves as a connecting hole with the outside air, and has a lower end that is configured to communicate with an air intake check valve V1 via a path, which is surrounded by an air intake path groove portion 221 formed on a main body plate 202 and a lower face of a cover plate 203. Inside of the air intake tube 207 and an upper side of the upper end portion 271 are covered with a cover 209 that is made of, for example, a breathing cloth. This prevents any foreign substance from entering the air intake tube 207 through the upper end portion 271. The cover 209 has a vent hole 291 that is formed above the upper end portion 271. The outside air introducing path 207 is configured by the air intake tube according to this embodiment but may be formed by another configuration.

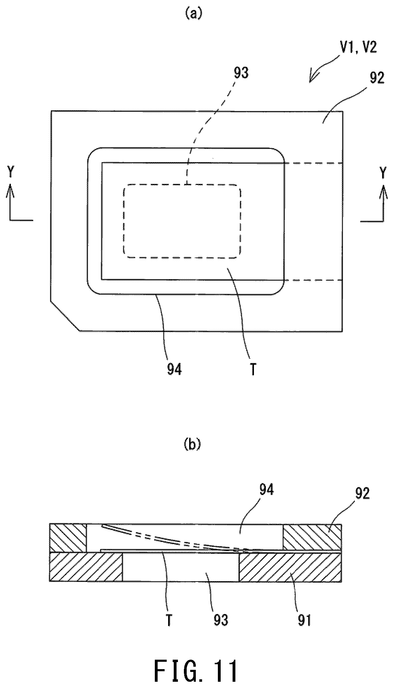

The following describes a modification of the air intake check valve V1 and the air release check valve V2 with reference to Fig. 11. The air intake check valve V1 and the air release check valve V2 have identical structures. An open/close hole 93 serving as an air inlet port is formed in a base member 91. A hole 94 larger than the open/close hole 93 is formed in a cover member 92 to serve as a movable area of a valve element T. The valve element T is a thin plate member having flexibility and has one end that is placed between the base member 91 and the cover member 92 to be fixed by adhesion or by welding. The valve element T is deformed by application of the pneumatic pressure to the open/close hole 93, so as to open the open/close hole 93.

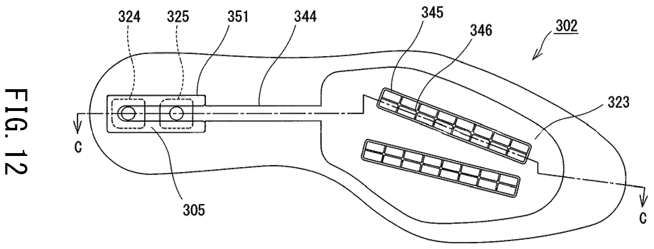

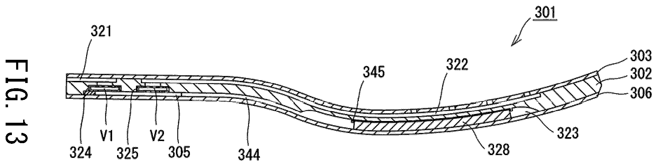

An insole 301 according to a fourth embodiment is described with reference to Fig. 12 to Fig. 14. This insole 301 basically has a similar structure to that of the insole 101. The illustrations and the descriptions of the first embodiment and the second embodiment are thus applied to the common structure, and the following mainly describes the differences. Reference signs given to the respective elements are corresponding numbers of the first embodiment in the 300s. Fig. 12 is a bottom view illustrating a state that an air intake check valve V1, an air release check valve V2 and a valve fixation plate 305 are mounted to a main body plate 302. Fig. 13 is a sectional view taken along a line C-C in Fig. 12.

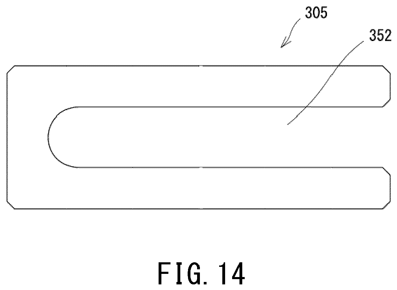

The insole 301 includes a cover plate 303, the main body plate 302 and a base plate 306. As shown in Fig. 12 and Fig. 13, the main body plate 302 is provided, in a lower face thereof, with a pump groove portion 323, a common path groove portion 344, an air intake valve mounting hole 324 configured to place the air intake check valve V1 therein, an air release valve mounting hole 325 configured to place the air release valve V2 therein, and a valve fixation plate mounting hole 351 placed below the mounting holes 324 and 325 and configured to place the valve fixation plate 305 shown in Fig. 14 therein.

The valve fixation plate 305 is an approximately U-shaped plate as shown in Fig. 14. The valve fixation plat 305 shown in Fig. 14 serves to fix the check valves V1 and V2 in a vertical direction, and inside of an U-shaped groove 352 thereof serves as an air passage and forms part of a common path.

The pump groove portion 323 and the common path groove portion 344 are formed in the lower face of the main body plate 302. This configuration eliminates the need for forming a groove portion in an upper face of the base plate 306 and thereby enables the base plate 306 to be formed by a thin plate member.

Protrusions 345 are formed to surround the outer circumferences of cushions 328 and to prevent positional displacement, inside of the pump groove portion 323 in the lower face of the main body plate 302. A large number of anti-slip convexes 346 having heights lower than the height of the protrusions 345 are formed on adhesive surfaces of the cushions 328. This configuration prevents positional displacement of the cushions 328, strengthens adhesion of the cushions 328 to the main body plate 302 and securely fixes the positions of the cushions 328.

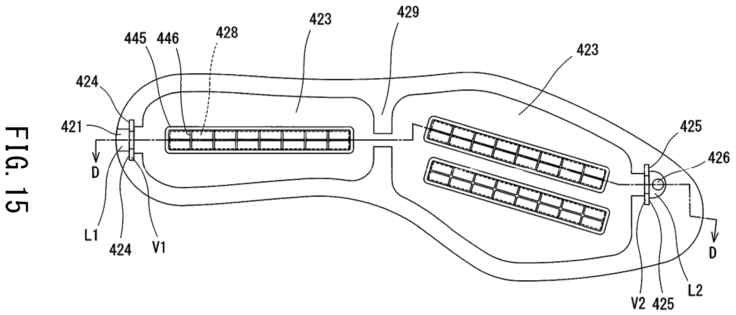

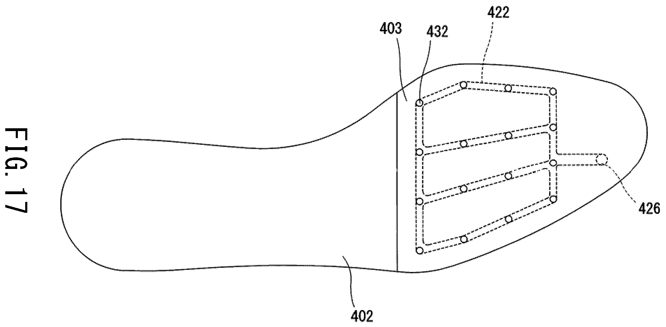

An insole 401 according to a fifth embodiment is described with reference to Fig. 15 to Fig. 18. This insole 401 basically has a similar structure to that of the insole 101. The illustrations and the descriptions of the first embodiment and the second embodiment are thus applied to the common structure, and the following mainly describes the differences. Reference signs given to the respective elements are corresponding numbers of the first embodiment in the 400s.

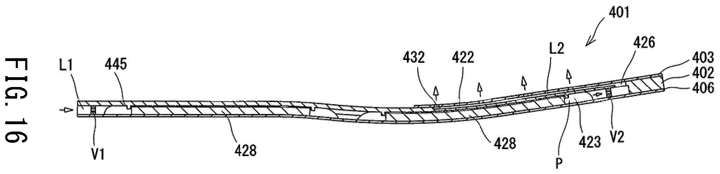

As shown in Fig. 16, the insole 401 is provided with an air intake path L1, an air release path L2, an air intake check valve V1 that communicates with the air intake path L1, an air release check valve V2 that communicates with the air release path L2, and a flat pump chamber P that communicates with the check valves V1 and V2. The insole 401 includes a cover plate 403, a main body plate 402 and a base plate 406. These plates are made of an elastic body, such as a rubber, a synthetic resin or the like.

As shown in Fig. 15 and Fig. 16, a pump groove portion 423 is formed in a lower face of the main body plate 402. The pump groove portion 423 is continuously formed in a wide range of the entire sole of the foot from a heel location to a location of the base of toes. A pump chamber partition 429 with an air passage formed therein is provided for the purpose of reinforcement. Cushions 428 are mounted respectively in a front area and in a rear area of the partition 429 of the pump chamber P. The structure of the cushions 428 and the mounting structure thereof are similar to those of the fourth embodiment, and their description is thus omitted. The pump chamber P is formed as a space surrounded by the pump groove portion 423 and an upper face of the base plate 406. According to the embodiment, the pump chamber P is formed over the area of the entire sole of the foot. This configuration increases the amount of ventilation.

The air intake check valve V1 is placed behind the pump chamber P to communicate with an outside air area provided inside of the shoe. The air release check valve V2 is placed in front of the pump chamber P. A front side of the air release check valve V2 forms part of the air release path L2, and an opening 426 communicating upward is formed on this front side. An air release path groove portion 422 that is extended to be branched rearward from an upper portion of the opening 426, is formed in an upper face of the main body plate 402.

The air release check valve V2 is placed at such a position that is not in contact with the big toe, on the outer side of the middle in a width direction of the insole 401. This configuration prevents deformation of the check valves V1 and V2 due to the wearer's weight load and enhances the durability of the insole 401.

The cover plate 403 covers part of the main body plate 402 and covers at least an area where the air release path groove portion 422 is formed. The cover plate 403 is provided with air release holes 432 that are formed at positions communicating with the air release path groove portion 422. The cover plate 403 is provided only in an area in front of the area of the arch of the foot. This configuration causes the cover plate 403 to be hardly affected by deformation of the sole in use and reduces the risk of peel-off of adhesion. This configuration also reduces the adhesion area between the cover plate 403 and the main body plate 402 and simplifies production. According to a modification, the cover plate 403 may be omitted, and the air may be ejected to inside of the shoe from the opening 426. According to another modification, an air release path groove portion may be formed in a lower face of the cover plate 403.

The air intake path L1 is formed as a space surrounded by an air intake path groove portion 421, which is placed behind the air intake check valve V1 and which is formed in the lower face of the main body plate 402, and the base plate 406. The air release path L2 includes a front area in front of the air release check valve V2, the opening 426, and a space surrounded by the air release path groove portion 422, which is formed in the upper face of the main body plate 402, and the lower face of the cover plate 403.

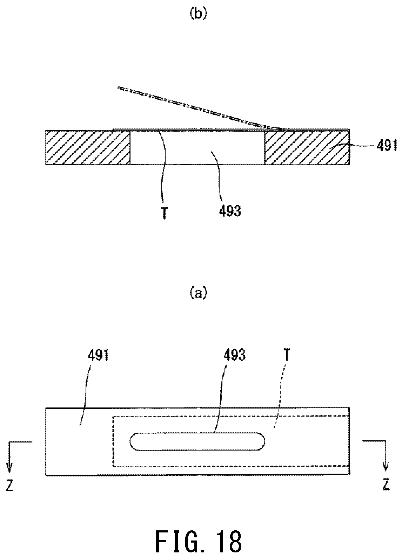

The following describes the check valves V1 and V2 used in this embodiment with reference to Fig. 18. The air intake check valve V1 and the air release check valve V2 include a base member 491 provided with an open/close hole 493 formed therein and a valve element T controlled to open and close the open/close hole 493.

The base member 491 is an approximately rectangular plate-like body that is extending in a lateral direction in the state that the base member 491 is placed in the insole. The open/close hole 493 is an elongated hole extended in a longitudinal direction of the base member 491 and penetrates between one face and the other face in a thickness direction of the base member 491. The open/close hole 493 may be any elongated hole that is extending in the lateral direction and has, for example, an elliptical shape or a rectangular shape. This configuration increases the area of the hole with restricting the height of the hole and increases the air inflow.
The "lateral direction" herein denotes a direction perpendicular to the thickness direction of the insole.

The valve element T is a thin plate that is extending in the lateral direction or in the longitudinal direction of the base member 491 and the open/close hole 493 and that has high flexibility. Either one of a left end and a right end of the valve element T is joined with one end of the base member 491, such as to open and close the open/close hole 493 in the lateral direction. This configuration moderates deformation of the valve element T in the course of passage of the air and reduces the load on the valve element T, thereby enhancing the durability of the valve element T.

The laterally elongated shape of the base member 491, the open/close hole 493, and the valve element T of the check valves V1 and V2 ensures a sufficient amount of ventilation with restricting the height of the check valves V1 and V2, and also decreases the wind speed in the course of passage of the air to reduce a damage to the valve element. The check valves V1 and V2 may be in a small size: for example, the base member 491 may have a height of approximately 4 mm, and the open/close hole 493 may have a height of approximately 1 mm and a width of approximately 10 mm.

As shown in Fig. 15 and Fig. 16, the base member 491 of the air intake check valve V1 and the air release check valve V2 is placed in an approximately vertical direction inside of the insole 401. Accordingly, a plate surface that is a principle surface of the base member 491 is extended in a thickness direction of the insole 401, and the open/close hole 493 is configured to penetrate in a direction perpendicular to the thickness direction of the insole (in a front-rear direction of the insole according to the embodiment). More specifically, an air intake valve mounting groove 424 and an air release valve mounting groove 425 having shapes corresponding to the shapes of the check valves V1 and V2 are formed in a left-right direction in passages that are present in front of and behind the pump chamber P, in the lower face of the main body plate 402. Respective left and right ends of the check valves V1 and V2 are fit in the corresponding valve mounting grooves 424 and 425 and are fixed by adhesion or the like. At least part of a joint region of the valve element T and the base member 491 is fit in the groove 424 or 425. This configuration suppresses peel-off of the valve element T from the base member 491. It is preferable to seal an adhesive surface between the base member 491 and the main body plate 402 with a sealing material, in order to prevent leakage of the air from a clearance therebetween. Placing the check valves V1 and V2 such that the open/close hole 493 penetrates in the front-rear direction provides a linear air passage and simplifies the configuration.

According to the embodiment, the pump chamber P is formed over the entire sole of the foot. Even when the body weight is placed on only one of the heel portion and the toe portion, this configuration causes a location where the body weight is placed in the pump chamber P to be compressed and causes the air in the pump chamber P to be released through the air release check valve V2 and the air release path L2.

According to a modification, the base plate 406 may be omitted from the configuration of the embodiment, and a main body plate may directly adhere to an inner bottom of a shoe. The pump chamber P may be formed as an area surrounded by the pump groove portion 423 and an upper face of the inner bottom of the shoe.

### Reference Signs List

1, 101, 201, 301, 401: insole
2, 102, 202, 302, 402: main body plate
3, 103, 203, 303, 403: cover plate
4, 104, 204: shoe
21, 121, 221, 321, 421: air intake path groove portion
22, 122, 222, 322, 422: air release path groove portion
23, 123, 223, 323, 423: pump groove portion
24, 324: air intake valve mounting hole
25, 325: air release valve mounting hole
26: opening
27: opening
28, 128, 228, 328, 428: cushion
31: air intake hole
32: air release hole
41: upper
42: outsole
43, 143: inner bottom face
44, 344: common path groove portion
81, 91, 491: base member
82, 92: cover member
83, 93, 493: open/close hole
84, 94: continuous hole
106, 306: base plate
161: common path groove portion
207: air intake tube (outside air introducing path)
271: upper end portion
209: cover
291: vent hole
305: valve fixation plate
345, 445: protrusion
346, 446, anti-slip convex
351: valve fixation plate mounting hole
352: inside of U-shaped groove
424: air intake valve mounting groove
425: air release valve mounting groove
L1: air intake path
L2: air release path
L3: common path
P: pump chamber
T: valve element
V1: air intake check valve
V2: air release check valve

## Claims

1. An insole (401) with ventilatory function, comprising:
an air intake path (L1);
an air release path (L2) configured to release the air inside of a shoe;
an air intake check valve (V1) placed to communicate with the air intake path (L1) and configured to include a base member (491) provided with an open/close hole (493) formed therein and a valve element (T) controlled to open and close the open/close hole (493);
an air release check valve (V2) placed to communicate with the air release path (L2) and configured to include a base member (491) provided with an open/close hole (493) formed therein and a valve element (T) controlled to open and close the open/close hole (493); and
a pump chamber (P) configured to communicate with the air intake check valve (V1) and with the air release check valve (V2) and formed in a flat shape to include at least a partial area in front of a position of an arch of foot, or a pump groove portion configured to form the pump chamber,
wherein at least one of the air intake check valve (V1) and the air release check valve (V2) is placed in the insole such that the open/close hole (493) thereof penetrates the base member (491) in a direction perpendicular to a thickness direction of the insole (401),
**characterized in that**
the open/close hole (493) is an elongated hole extending in a lateral direction in a front view of such one of the air intake check valve (V1) and the air release check valve (V2), and
the valve element (T) of at least one of the air intake check valve (V1) and the air release check valve (V2) having open/close hole (493) that is an elongated hole extending in a lateral direction is a plate-like body that is extending in the lateral direction in a front view of such one of the air intake check valve (V1) and the air release check valve (V2), and has either one end of a left end and a right end joined with the base member (491), and is configured to open and close the open/close hole (493) in the lateral direction.

2. The insole according to claim 1,
wherein a left and right ends of the air intake check valve (V1) and the air release check valve (V2) are respectively fixed in an air intake valve mounting groove (424) and an air release valve mounting groove (425) formed in the insole, and
at least part of a joint region of the valve element (T) that is extending in the lateral direction and the base member (491) is fit in the air intake valve mounting groove (424) or the air release valve mounting groove (425).

3. The insole according to either claim 1 or 2,
wherein the base member (491) of at least one of the air intake check valve (V1) and the air release check valve (V2) having open/close hole (493) that is an elongated hole extended in a lateral direction is a plate-like body that is extending in the lateral direction, and has a plate surface placed in the thickness direction of the insole.

4. The insole according to either claim 1 or 2,
wherein the pump chamber (P) or the pump groove portion is formed as an area from a heel location to a location of base of toes,
the air intake check valve (V1) is placed behind the pump chamber (P) or the pump groove portion,
the air release check valve (V2) is placed in front of the pump chamber (P) or the pump groove portion, and
the base member (491) of the air intake check valve (V1) and of the air release check valve (V2) is a plate-like body and is placed, such that the open/close hole (493) of the air intake check valve (V1) and of the air release check valve (V2) penetrates the base member (491) in a front-rear direction of the insole.

5. The insole according to claim 1,
the insole (401) comprising a main body plate (402); and a cover plate (403) that is laid on at least part of an upper face of the main body plate (402), wherein
the main body plate (402) is provided with an air intake valve mounting groove (424) and an air release valve mounting groove (425) formed to mount the air intake check valve (V1) and the air release check valve (V2) respectively thereto, as well as the pump groove portion, and
at least part of the air release path (L2) is formed as an area surrounded by an air release path groove portion (422) formed in the upper face of the main body plate (402) and a lower face of the cover plate (403) or as an area surrounded by the upper face of the main body plate (402) and an air release path groove portion (422) formed in the lower face of the cover plate.

6. The insole according to claim 5,
the insole further comprising a base plate (406) that is laid under the main body plate (402).

7. The insole according to claim 5,
wherein the pump groove portion is provided with a plurality of cushions (428) adhering to a lower face of the main body plate,
the pump groove portion is provided with protrusions (445) to surround the outer circumferences of the cushions (428) and to prevent positional displacement of the cushions (428), and
a plurality of anti-slip convexes are formed on an adhesive surface of each of the cushions of the main body plate (402).

8. The insole according to claim 4,
wherein the air release check valve (V2) is placed at a position that is on the outer side of the middle in a width direction of the insole (401).

9. A shoe, comprising:
an upper and an outsole that are molded integrally; and
the insole (401) according to either claim 1 or 2 laid in an inner bottom face of the shoe.

## Patentansprüche

1. Einlegesohle (401) mit Lüftungsfunktion, umfassend:
einen Lufteinlasspfad (L1);
einen Luftabgabepfad (L2), der dazu konfiguriert ist, die Luft innen in einem Schuh abzugeben;
ein Lufteinlassrückschlagventil (V1), das so platziert ist, dass es mit dem Lufteinlasspfad (L1) kommuniziert, und dazu konfiguriert ist, eine Basiskomponente (491), die mit einem darin gebildeten Öffnungs-/Schließungsloch (493) bereitgestellt ist, und ein Ventilelement (T), das dazu gesteuert wird, das Öffnungs-/Schließungsloch (493) zu öffnen und zu schließen, zu beinhalten;
ein Luftabgaberückschlagventil (V2), das so platziert ist, dass es mit dem Luftabgabepfad (L2) kommuniziert, und dazu konfiguriert ist, eine Basiskomponente (491), die mit einem darin gebildeten Öffnungs-/Schließungsloch (493) bereitgestellt ist, und ein Ventilelement (T), das dazu gesteuert wird, das Öffnungs-/Schließungsloch (493) zu öffnen und zu schließen, zu beinhalten; und
eine Pumpkammer (P), die dazu konfiguriert ist, mit dem Lufteinlassrückschlagventil (V1) und mit dem Luftabgaberückschlagventil (V2) zu kommunizieren, und die in einer flachen Form gebildet ist, um mindestens einen Teilbereich vor einer Position eines Fußgewölbes zu beinhalten, oder einen Pumpnutabschnitt, der dazu konfiguriert ist, die Pumpkammer zu bilden,
wobei mindestens eines des Lufteinlassrückschlagventils (V1) und des Luftabgaberückschlagventils (V2) derart in der Einlegesohle platziert ist, dass das Öffnungs-/Schließungsloch (493) davon die Basiskomponente (491) in einer Richtung senkrecht zu einer Dickenrichtung der Einlegesohle (401) durchdringt, **dadurch gekennzeichnet,**
**dass** das Öffnungs-/Schließungsloch (493) ein längliches Loch ist, das sich in einer Vorderansicht eines derartigen des Lufteinlassrückschlagventils (V1) und des Luftabgaberückschlagventils (V2) in einer lateralen Richtung erstreckt, und
wobei das Ventilelement (T) von mindestens einem des Lufteinlassrückschlagventils (V1) und des Luftabgaberückschlagventils (V2), welches das Öffnungs-/Schließungsloch (493), das ein längliches Loch ist, das sich in einer lateralen Richtung erstreckt, aufweist, ein plattenartiger Körper ist, der sich in einer Vorderansicht eines derartigen des Lufteinlassrückschlagventils (V1) und des Luftabgaberückschlagventils (V2) in der lateralen Richtung erstreckt und ein Ende von entweder einem linken Ende oder einem rechten Ende, die mit der Basiskomponente (491) verbunden sind, aufweist und dazu konfiguriert ist, das Öffnungs-/Schließungsloch (493) in der lateralen Richtung zu öffnen und zu schließen.

2. Einlegesohle nach Anspruch 1,
wobei ein linkes und ein rechtes Ende des Lufteinlassrückschlagventils (V1) und des Luftabgaberückschlagventils (V2) jeweils in einer Lufteinlassventilmontagenut (424) und einer Luftabgabeventilmontagenut (425), die in der Einlegesohle gebildet sind, fixiert sind und
mindestens ein Teil einer gemeinsamen Region des Ventilelements (T), das sich in der lateralen Richtung erstreckt, und der Basiskomponente (491) in die Lufteinlassventilmontagenut (424) oder die Luftabgabeventilmontagenut (425) eingepasst ist.

3. Einlegesohle nach entweder Anspruch 1 oder 2,
wobei die Basiskomponente (491) von mindestens einem des Lufteinlassrückschlagventils (V1) und des Luftabgaberückschlagventils (V2), die das Öffnungs-/Schließungsloch (493), das ein längliches Loch ist, das in einer lateralen Richtung erstreckt ist, aufweisen, ein plattenartiger Körper ist, der sich in der lateralen Richtung erstreckt und eine Plattenoberfläche, die in der Dickenrichtung der Einlegesohle platziert ist, aufweist.

4. Einlegesohle nach entweder Anspruch 1 oder 2,
wobei die Pumpkammer (P) oder der Pumpnutabschnitt als ein Bereich von einer Fersenlage zu einer Lage der Zehenbasis gebildet ist,
das Lufteinlassrückschlagventil (V1) hinter der Pumpkammer (P) oder dem Pumpnutabschnitt platziert ist,
das Luftabgaberückschlagventil (V2) vor der Pumpkammer (P) oder dem Pumpnutabschnitt platziert ist, und
die Basiskomponente (491) des Lufteinlassrückschlagventils (V1) und des Luftabgaberückschlagventils (V2) ein plattenartiger Körper ist und derart platziert ist, dass das Öffnungs-/Schließungsloch (493) des Lufteinlassrückschlagventils (V1) und des Luftabgaberückschlagventils (V2) die Basiskomponente (491) in einer vorne-hinten Richtung der Einlegesohle durchdringt.

5. Einlegesohle nach Anspruch 1,
wobei die Einlegesohle (401) eine Hauptkörperplatte (402) umfasst; und eine Abdeckplatte (403), die auf mindestens einen Teil einer Oberseite der Hauptkörperplatte (402) gelegt ist, wobei
die Hauptkörperplatte (402) mit einer Lufteinlassventilmontagenut (424) und einer Luftabgabeventilmontagenut (425), die gebildet ist, um jeweils das Lufteinlassrückschlagventil (V1) und das Luftabgaberückschlagventil (V2) daran zu montieren, sowie dem Pumpnutabschnitt bereitgestellt ist, und
mindestens ein Teil des Luftabgabepfads (L2) gebildet ist als ein Bereich, der durch einen Luftabgabepfadnutabschnitt (422), der in der Oberseite der Hauptkörperplatte (402) gebildet ist, und eine Unterseite der Abdeckplatte (403) umgeben ist, oder als ein Bereich, der durch die Oberseite der Hauptkörperplatte (402) und einen Luftabgabepfadnutabschnitt (422), der in der Unterseite der Abdeckplatte gebildet ist, umgeben ist.

6. Einlegesohle nach Anspruch 5,
wobei die Einlegesohle ferner eine Basisplatte (406), die unter die Hauptkörperplatte (402) gelegt ist, umfasst.

7. Einlegesohle nach Anspruch 5,
wobei der Pumpnutabschnitt mit einer Vielzahl von Kissen (428), die an einer Unterseite der Hauptkörperplatte haften, bereitgestellt ist,
der Pumpnutabschnitt mit Vorsprüngen (445) bereitgestellt ist, um die äußeren Umfänge der Kissen (428) zu umgeben und eine Positionsverschiebung der Kissen (428) zu verhindern, und
eine Vielzahl von Antirutschkonvexen auf einer Haftoberfläche von jedem der Kissen der Hauptkörperplatte (402) gebildet ist.

8. Einlegesohle nach Anspruch 4,
wobei das Luftabgaberückschlagventil (V2) an einer Position platziert ist, die sich in einer Breitenrichtung der Einlegesohle (401) auf der Außenseite der Mitte befindet.

9. Schuh, umfassend:
ein Oberteil und eine Außensohle, die integral geformt sind; und die Einlegesohle (401) nach entweder Anspruch 1 oder 2, die in eine innere Bodenseite des Schuhs gelegt ist.

## Revendications

1. Première de propreté (401) équipée d'une fonction de ventilation, comprenant :
un chemin d'admission d'air (L1) ;
un chemin de libération d'air (L2) configuré pour libérer l'air à l'intérieur d'une chaussure ;
une soupape de retenue d'admission d'air (V1) placée pour communiquer avec le chemin d'admission d'air (L1) et configurée pour inclure un élément de base (491) doté d'un trou d'ouverture/fermeture (493) formé à l'intérieur de celui-ci et un élément de soupape (T) commandé pour ouvrir et fermer le trou d'ouverture/fermeture (493) ;
une soupape de retenue de libération d'air (V2) placée pour communiquer avec le chemin de libération d'air (L2) et configurée pour inclure un élément de base (491) doté d'un trou d'ouverture/fermeture (493) formé à l'intérieur de celui-ci et un élément de soupape (T) commandé pour ouvrir et fermer le trou d'ouverture/fermeture (493) ; et
une chambre de pompe (P) configurée pour communiquer avec la soupape de retenue d'admission d'air (V1) et avec la soupape de retenue de libération d'air (V2) et formée selon une forme plate pour inclure au moins une zone partielle devant une position d'une voûte plantaire, ou une partie de rainure de pompe configurée pour former la chambre de pompe,
dans laquelle au moins l'une de la soupape de retenue d'admission d'air (V1) et de la soupape de retenue de libération d'air (V2) est placée dans la première de propreté de telle sorte que son trou d'ouverture/fermeture (493) pénètre dans l'élément de base (491) dans une direction perpendiculaire à une direction de l'épaisseur de la première de propreté (401), **caractérisée en ce que**
le trou d'ouverture/fermeture (493) est un trou allongé s'étendant dans une direction latérale dans une vue de face de l'une telle de la soupape de retenue d'admission d'air (V1) et de la soupape de retenue de libération d'air (V2), et
l'élément de soupape (T) d'au moins l'une de la soupape de retenue d'admission d'air (V1) et de la soupape de retenue de libération d'air (V2) ayant un trou d'ouverture/fermeture (493) qui est un trou allongé s'étendant dans une direction latérale est un corps de type plaque qui s'étend dans la direction latérale dans une vue de face de l'une telle de la soupape de retenue d'admission d'air (V1) et de la soupape de retenue de libération d'air (V2), et présente l'une ou l'autre extrémité parmi une extrémité gauche et une extrémité droite jointe à l'élément de base (491), et est configuré pour ouvrir et fermer le trou d'ouverture/fermeture (493) dans la direction latérale.

2. Première de propreté selon la revendication 1,
dans laquelle des extrémités gauche et droite de la soupape de retenue d'admission d'air (V1) et de la soupape de retenue de libération d'air (V2) sont respectivement fixées dans une rainure de montage de soupape d'admission d'air (424) et une rainure de montage de soupape de libération d'air (425) formées dans la première de propreté, et
au moins une partie d'une région de jointure de l'élément de soupape (T) qui s'étend dans la direction latérale et de l'élément de base (491) est ajustée dans la rainure de montage de soupape d'admission d'air (424) ou la rainure de montage de soupape de libération d'air (425).

3. Première de propreté selon l'une ou l'autre des revendications 1 ou 2,
dans laquelle l'élément de base (491) d'au moins l'une de la soupape de retenue d'admission d'air (Vl) et de la soupape de retenue de libération d'air (V2) ayant un trou d'ouverture/fermeture (493) qui est un trou allongé étendu dans une direction latérale est un corps de type plaque qui s'étend dans la direction latérale, et présente une surface de plaque placée dans la direction de l'épaisseur de la première de propreté.

4. Première de propreté selon l'une ou l'autre des revendications 1 ou 2,
dans laquelle la chambre de pompe (P) ou la partie de rainure de pompe est formée comme une zone allant d'un emplacement de talon à un emplacement de base des orteils,
la soupape de retenue d'admission d'air (V1) est placée derrière la chambre de pompe (P) ou la partie de rainure de pompe,
la soupape de retenue de libération d'air (V2) est placée devant la chambre de pompe (P) ou la partie de rainure de pompe, et
l'élément de base (491) de la soupape de retenue d'admission d'air (Vl) et de la soupape de retenue de libération d'air (V2) est un corps de type plaque et est placé de telle sorte que le trou d'ouverture/fermeture (493) de la soupape de retenue d'admission d'air (Vl) et de la soupape de retenue de libération d'air (V2) pénètre dans l'élément de base (491) dans une direction avant-arrière de la première de propreté.

5. Première de propreté selon la revendication 1,
la première de propreté (401) comprenant une plaque de corps principal (402) ; et une plaque de recouvrement (403) qui est posée sur au moins une partie d'une face supérieure de la plaque de corps principal (402), dans laquelle
la plaque de corps principal (402) est dotée d'une rainure de montage de soupape d'admission d'air (424) et d'une rainure de montage de soupape de libération d'air (425) formées pour y monter respectivement la soupape de retenue d'admission d'air (V1) et la soupape de retenue de libération d'air (V2), ainsi que la partie de rainure de pompe, et
au moins une partie du chemin de libération d'air (L2) est formée comme une zone entourée par une partie de rainure de chemin de libération d'air (422) formée dans la face supérieure de la plaque de corps principal (402) et une face inférieure de la plaque de recouvrement (403) ou comme une zone entourée par la face supérieure de la plaque de corps principal (402) et une partie de rainure de chemin de libération d'air (422) formée dans la face inférieure de la plaque de recouvrement.

6. Première de propreté selon la revendication 5,
la première de propreté comprenant en outre une plaque de base (406) qui est posée sous la plaque de corps principal (402).

7. Première de propreté selon la revendication 5,
dans laquelle la partie de rainure de pompe est dotée d'une pluralité de coussins (428) adhérant à une face inférieure de la plaque de corps principal,
la partie de rainure de pompe est dotée de saillies (445) pour entourer les circonférences extérieures des coussins (428) et pour empêcher un déplacement positionnel des coussins (428), et une pluralité de parties convexes antidérapantes sont formées sur une surface adhésive de chacun des coussins de la plaque de corps principal (402).

8. Première de propreté selon la revendication 4,
dans laquelle la soupape de retenue de libération d'air (V2) est placée au niveau d'une position qui est sur le côté extérieur du milieu dans une direction de la largeur de la première de propreté (401).

9. Chaussure, comprenant :
une tige et une semelle d'usure qui sont moulées de manière solidaire ; et
la première de propreté (401) selon l'une ou l'autre des revendications 1 ou 2 posée dans une face de fond intérieure de la chaussure.
